# FASCICULE DE BREVET EUROPEEN

(11) **EP 3 016 022 B1**
(45) Date de publication et mention de la délivrance du brevet: **19.10.2022**
(21) Numéro de dépôt: 15192238.2
(22) Date de dépôt: 30.10.2015
(51) Int. Cl.: G06K 7/08

(54) **TERMINAL DE PAIEMENT**
ZAHLUNGSTERMINAL
PAYMENT TERMINAL

(30) Priorité: 03.11.2014 FR 1460592
(43) Date de publication de la demande: 04.05.2016
(73) Titulaire: Banks and Acquirers International Holding, 75015 Paris (FR)
(72) Inventeur: BERTHIAUD, Olivier, 07130 CORNAS (FR); ANDRE, Jérôme, 26800 MONTOISON (FR)
(74) Mandataire: Vidon Brevets & Stratégie

(56) Documents cités:
- EP-A1- 2 101 280
- US-S1- D 372 730
- "MX 900 Series Reference Manual", Verifone Inc. , 14 septembre 2012 (2012-09-14), page 66PP, XP055201702, Extrait de l'Internet: URL:http://support.verifone.com/verifone/s upport/contentView.do?channelId=-43019&pro gramId=478239&categoryId=-50255 [extrait le 2015-07-10]
- "Notice terminal lecteur carte magnétique", , 22 décembre 2000 (2000-12-22), XP055202058, INPI Modeles Extrait de l'Internet: URL:http://bases-modeles.inpi.fr/Typo3_INP I_Modeles/dessins_fiche_resultats.html?ind ex=1&refId=005148_201512_001_dmf_605661&y= 0 [extrait le 2015-07-14]
- "Notice design terminal lecteur carte magnétique", , 30 juin 1982 (1982-06-30), XP055202059, INPI Modeles Extrait de l'Internet: URL:http://bases-modeles.inpi.fr/Typo3_INP I_Modeles/dessins_fiche_resultats.html?ind ex=1&refId=821618_201221_001_dmf_200803&y= 0 [extrait le 2015-07-14]

## Description

### 1. Domaine de l'invention

L'invention se rapporte au domaine des terminaux de paiement. L'invention se rapporte plus particulièrement au domaine de terminaux de paiement disposant d'un lecteur de carte à mémoire magnétique. Un terminal de paiement est un dispositif qui permet d'effectuer des achats à l'aide d'un moyen de paiement. Les terminaux actuels sont souvent appelés terminaux multimodaux. Ils acceptent en effet plusieurs types de moyens de paiement : des cartes à mémoire, des cartes sans contact ou encore des terminaux de communication fonctionnant en mode sans contact.

Parmi les cartes à mémoire, il existe au moins deux types de mémoire différent : la carte à mémoire à puce, que l'on trouve communément en Europe et à la carte à mémoire magnétique, que l'on trouve communément aux États-Unis. Notons par ailleurs qu'en Europe on trouve également une proportion non négligeable de cartes multimodales : de telles cartes comprennent à la fois une bande magnétique, disposée généralement au dos de la carte, selon la norme ISO 7811 et une puce, disposée sur la face avant de la carte à mémoire.

Les terminaux de paiement, quant à eux, disposent souvent de plusieurs lecteurs pour interagir avec ces cartes de paiement : un lecteur de carte à mémoire à puce et un lecteur de carte à mémoire magnétique, permettant de lire une bande magnétique.

### 2. Art Antérieur

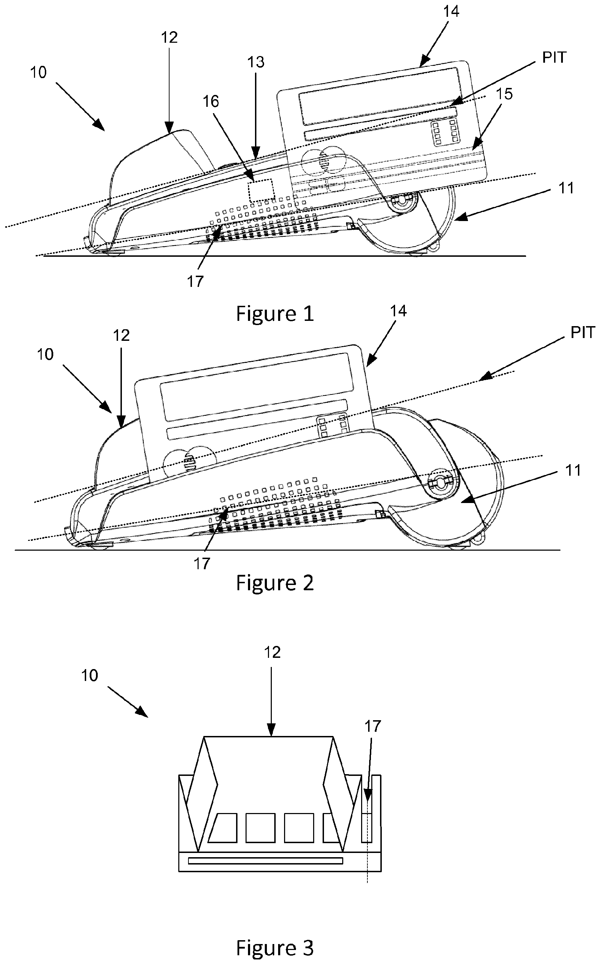

Un terminal de paiement comprend des moyens de lecture de carte à mémoire magnétique. Pout ce faire, le terminal est muni d'une rainure, qui se trouve soit sur le côté du terminal soit au-dessus de l'écran. Cette rainure permet d'insérer la carte et de faire passer la bande magnétique qu'elle contient devant une tête magnétique afin que les informations contenues sur la carte puissent être lues par le terminal de paiement. L'utilisateur insère la carte dans cette rainure et imprime un mouvement translatif à la carte afin que la piste magnétique se déplace devant la tête magnétique du terminal de paiement. Les terminaux qui disposent d'une rainure au-dessus de l'écran ont tendance à disparaître. Il s'agit de terminaux plutôt anciens et volumineux. Dans une démarche de compacité, les terminaux modernes comprennent plutôt une rainure d'insertion sur le côté. Une telle architecture est décrite en relation avec les figures 1, 2 et 3 représentent un exemple de terminal de paiement. Ces figures ne sont bien entendu pas limitatives du point de vue de l'étendu de la présente divulgation et ne servent qu'à exposer un état de la technique. Un terminal de paiement (10) est un dispositif comprenant, dans cet exemple une enveloppe rigide (par exemple de la matière plastique injectée). Dans cet exemple, le terminal comprend un logement (11) pour un rouleau de papier d'une imprimante. Il comprend également un cache code (12). Ce cache code est utilisé pour masquer la saisie d'un code confidentiel. Dans l'exemple décrit, on note également que le logement (11) pour un rouleau de papier est utilisé pour créer un angle d'inclinaison du terminal lorsque celui-ci est posé sur un support horizontal. Dans cet exemple, l'inclinaison du terminal est d'environ 5° à 15°. L'inclinaison du terminal est mesurée par rapport à un plan général de visualisation formé par le clavier et/ou l'écran du terminal (PIT). Cette inclinaison n'est pas le fruit du hasard : elle permet à l'utilisateur de mieux distinguer ce qui est affiché sur l'écran du terminal (13) et elle permet de mieux voir et utiliser le clavier. D'ailleurs, sur d'autres terminaux de paiement qui ne comprennent pas ce logement (11) pour un rouleau de papier, des pieds de rehaussement complémentaires peuvent être ajouté à la place du logement (11) pour un rouleau de papier afin d'offrir un même angle d'inclinaison.

Comme cela est exposé en figure 1 et 2, la carte (14) suit un mouvement translatif dans une rainure (il s'agit d'une rainure dont les deux parois verticales ont une très grande taille afin de garantir la stabilité de la carte et l'uniformité de son mouvement translatif). Les pistes magnétiques de la carte (15) peuvent alors être lues par une tête magnétique (16). La carte repose sur le fond de la rainure (17). Le fond (17) de cette rainure, par voie de conséquence, est également incliné d'un angle plus ou moins identique à l'angle d'inclinaison du terminal (soit entre 5° et 10° dans cet exemple). Sur ces figures, le plan d'inclinaison du terminal (PIT) et le fond de la rainure (17) ne sont pas parallèles.

Le document EP 2 101 280 A1, par exemple, divulgue un terminal de paiement par carte comprenant un lecteur magnétique dans une fente latérale, cependant le fond de la rainure de la fente n'est pas parallèle au plan de pose du terminal mais incliné.

Cela pose deux problèmes : le premier problème tient au fait que le mouvement de translation est rendu plus difficile. Il est en effet plus difficile d'effectuer un mouvement de translation sur une surface inclinée car en même temps que l'on effectue cette translation, il faut penser à appuyer vers le bas, ce qui n'est pas très naturel.

Le deuxième problème tient à l'obstruction qui est fait au mouvement : en effet, la présence du cache code empêche de réaliser le mouvement de translation de manière correcte. En effet, lorsque l'on saisit la carte, on a plutôt tendance à la saisir en plein milieu, afin de conserver un équilibre correct. En faisant cela, comme l'espace situé entre la carte et la paroi latérale du cache code n'est pas suffisant pour un doigt, on ne peut pas effectuer le mouvement jusqu'au bout. Le doigt (par exemple le pouce, lorsque la rainure est située du côté droit du terminal, comme c'est quasiment toujours le cas). Dès lors, soit la transaction échoue et il faut repasser la carte, soit il faut, durant le mouvement translatif, ajuster la position des doigts afin de na pas buter dans le cache code.

### 3. Résumé

La présente divulgation permet de résoudre au moins en partie certains problèmes posés par ces terminaux de l'art antérieur. On divulgue en effet un terminal de paiement comprenant une rainure d'insertion d'une carte à mémoire magnétique. Selon la présente divulgation, un tel terminal se caractérise par le fait que le plan du fond de la rainure d'insertion d'une carte à mémoire magnétique est sensiblement parallèle au plan sur lequel le terminal est posé.

En d'autres termes le plan du fond de la rainure d'insertion d'une carte à mémoire magnétique est conformé selon un angle sensiblement inverse à l'angle d'inclinaison du terminal de paiement (que cet angle soit dû à la présence d'un logement pour un rouleau de papier d'une imprimante ou à la présence de pieds d'inclinaison du terminal.

Plus particulièrement, il est divulgué un terminal de paiement comprenant une rainure d'insertion d'une carte à mémoire magnétique et dont un plan général de visualisation formé par un clavier et/ou un écran du terminal forme un angle non nul avec un plan général de pose dudit terminal.

Le terminal se caractérise par le fait que le plan du fond de la rainure d'insertion d'une carte à mémoire magnétique est sensiblement parallèle au plan sur lequel le terminal est posé.

Selon un mode de réalisation particulier ce que le plan du fond de la rainure d'insertion forme un angle compris entre 0° et 5° avec le un plan général de visualisation.

Ainsi, de part cette configuration, le mouvement de translation est facilité. En effet, il n'est plus nécessaire de presser la carte afin qu'elle suive parfaitement l'angle d'inclinaison du fond de la rainure car cet angle d'inclinaison est nul.

Selon une caractéristique particulière la hauteur de la rainure par rapport au plan sur lequel le terminal est posé est calculée pour que les doigts qui maintiennent la carte sors de son mouvement de translation n'entrent pas en contact avec le cache code du terminal. Ainsi, l'utilisateur est libre de tenir la carte comme il le souhaite.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1, déjà commentée, est une vue de côté d'un terminal de paiement de l'art antérieur dans laquelle dans laquelle la carte, le fond de la rainure et la tête magnétique sont représentés en pointillés ;
- la figure 2 illustre, déjà commentée, est une vue de côté d'un terminal de paiement de l'art antérieur dans laquelle dans laquelle la carte est en cours de translation dans la rainure ;
- la figure 3 représente schématiquement une face avant d'un terminal conforme aux figures 1 et 2 ;
- la figure 4 est une vue de côté d'un terminal de paiement conforme à la présente divulgation ;
- la figure 5 est une vue isométrique d'un terminal de paiement conforme à la présente divulgation.

### 5. Mode de réalisation

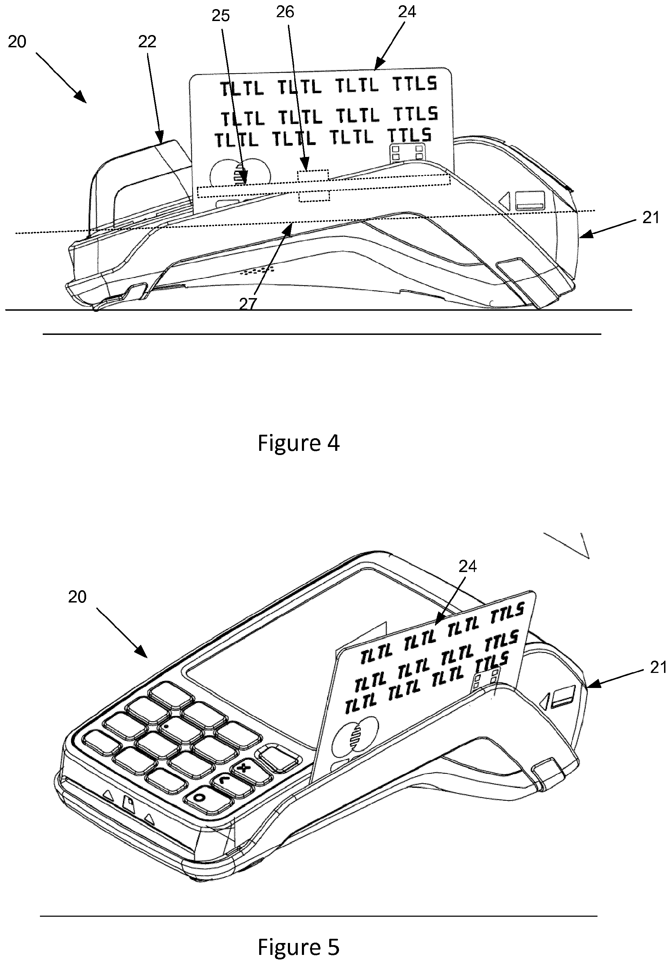

On décrit, en relation avec les figures 4 et 5, un mode de réalisation de la technique proposée dans la présente divulgation.

Un terminal de paiement (20) est un dispositif comprenant, dans cet exemple une enveloppe rigide (par exemple de la matière plastique injectée). Dans cet exemple, le terminal comprend un logement (21) pour un rouleau de papier d'une imprimante. Il comprend également un cache code (22). Ce cache code est utilisé pour masquer la saisie d'un code confidentiel. Dans l'exemple décrit, on note également que le logement (21) pour un rouleau de papier est utilisé pour créer un angle d'inclinaison du terminal lorsque celui-ci est posé sur un support horizontal. Dans cet exemple, l'inclinaison du terminal est d'environ 5° à 15°.

Comme cela est exposé en figure 4 et 5, la carte (24) suit un mouvement translatif dans une rainure (il s'agit d'une rainure dont les deux parois verticales ont une très grande taille afin de garantir la stabilité de la carte et l'uniformité de son mouvement translatif). Les pistes magnétiques de la carte (25) peuvent alors être lues par une tête magnétique (26). La carte repose sur le fond de la rainure (27). Le fond de la rainure est une surface sensiblement plane, de faible largeur (largeur légèrement supérieure à l'épaisseur de la carte, épaisseur qui est elle-même normativement définie dans l'un des fascicules du standard 7811). À la différence de la solution de l'art antérieur, le fond (27) de cette rainure est sensiblement parallèle par rapport au plan de pose du terminal. En d'autres termes, l'angle d'inclinaison de la rainure est sensiblement l'opposé de l'angle d'inclinaison du terminal (soit environ -5° à -15° dans cet exemple).

Plus particulièrement, l'angle du fond de la rainure est situé entre 0 et 5 degrés par rapport au plan horizontal de pose du terminal de paiement. Cet angle du fond de la rainure est adapté afin de produire un mouvement de translation aisé à réaliser. Plus spécifiquement, dans le mode de réalisation présenté en relation avec les figures 4 et 5, l'angle du fond de la rainure est d'environ 3°.

Ainsi, on peut noter que ce terminal est incliné (lorsqu'il est posé) et ceci présente un avantage certain comme décrit préalablement. La face avant est inclinée d'un angle d'environ 15° par rapport au plan horizontal de pose du terminal. La pose du terminal est nécessaire (ou en tous cas utile) lorsque l'utilisateur souhaite passer une carte magnétique. Pour faciliter ce passage de la carte magnétique, le plan de translation de celle-ci devant la tête magnétique est sensiblement parallèle au plan horizontal de pose du terminal.

Par ailleurs, la hauteur de la rainure par rapport au plan de pose du terminal est calculée pour que les doigts qui maintiennent la carte sors de son mouvement de translation n'entrent pas en contact avec le cache code du terminal. Ceci permet de conserver une dimension importante du cache code.

En effet, cette deuxième caractéristique, permet cependant de répondre à un autre problème qui est celui relatif aux dimensions du cache code : en effet, pour éviter que le cache code soit efficace, il ne faut pas qu'il soit trop petit. Une solution pour éviter que les doigts butent dans le cache code est de réduire la taille de celui-ci. Avec cette caractéristique supplémentaire relative à la hauteur de la rainure, on évite donc de devoir réduire les dimensions du cache code.

Cela permet de régler au moins les problèmes suivants :
- l'utilisateur ne heurte pas la cache code (quand le terminal en est équipé) lorsqu'il fait glisser la carte ;
- la distance de course (de translation) est moindre ;
- comme la tranche de la carte est à l'horizontale, le mouvement est effectué plus facilement.

## Revendications

1. Terminal de paiement (20) comprenant une rainure d'insertion d'une carte à mémoire magnétique (24) et dont un plan général de visualisation formé par un clavier et/ou un écran du terminal (PIT) forme un angle non nul avec un plan général de pose dudit terminal (20), ladite rainure étant disposée sur un côté latéral dudit terminal, ledit terminal comprenant en outre un cache code (22) et étant **caractérisé en ce que** le plan du fond (27) de la rainure d'insertion d'une carte à mémoire magnétique (24) étant sensiblement parallèle au plan sur lequel le terminal est posé et **en ce que** la hauteur de la rainure par rapport au plan sur lequel le terminal est posé est calculée pour que des doigts qui maintiennent la carte (24) lors de son mouvement de translation au sein de la rainure n'entrent pas en contact avec ledit cache code (24) du terminal (20).

2. Terminal selon la revendication 1, **caractérisé en ce que** le plan du fond (27) de la rainure d'insertion forme un angle compris entre 0° et 5° avec le plan sur lequel le terminal est posé.

## Patentansprüche

1. Zahlungsterminal (20), umfassend einen Schlitz zum Einführen einer Magnetspeicherkarte (24), bei dem eine allgemeine Anzeigeebene, die von einer Tastatur und/oder einem Bildschirm des Terminals (PIT) gebildet ist, einen Winkel ungleich Null mit einer allgemeinen Aufstellungsebene des Terminals (20) bildet, wobei der Schlitz auf einer Seite des Terminals angeordnet ist, wobei das Terminal ferner einen Cache-Code (22) umfasst und **dadurch gekennzeichnet ist, dass** die Ebene des Bodens (27) des Schlitzes zum Einführen einer Magnetspeicherkarte (24) im Wesentlichen parallel zur Ebene ist, auf der das Terminal aufgestellt ist, und dass die Höhe des Schlitzes in Bezug zu der Ebene, auf der das Terminal aufgestellt ist, derart berechnet ist, dass die Finger, die die Karte (24) bei ihrer Einführbewegung in den Schlitz halten, nicht mit dem Cache-Code (24) des Terminals (20) in Kontakt kommen.

2. Terminal nach Anspruch 1, **dadurch gekennzeichnet, dass** die Ebene des Bodens (27) des Einführschlitzes einen Winkel zwischen 0° und 5° mit der Ebene, auf der das Terminal aufgestellt ist, bildet.

## Claims

1. Payment terminal (20) comprising a slot for inserting a magnetic memory card (24), a general display plane of said terminal, formed by a keyboard and/or a screen of the terminal (PIT), forming a non-zero angle with a general positioning surface of said terminal (20), said slot being arranged on a lateral side of said terminal, said terminal further comprising a pin-code mask (22) and being **characterized in that** the bottom plane (27) of the insertion slot of a magnetic memory card (24) is substantially parallel to the plane on which the terminal is positioned and **in that** the height of the slot relative to the plane on which the terminal is positioned is calculated so that fingers holding the card (24) during its translational motion within the slot do not come into contact with said pin-code mask (24) of the terminal (20).

2. Terminal according to claim 1, **characterized in that** the bottom plane (27) of the insertion slot forms an angle of 0° to 5° with the plane on which the terminal is positioned.
